# EUROPEAN PATENT APPLICATION

(11) **EP 1 249 279 A1**
(43) Date of publication of application: **16.10.2002**
(21) Application number: 02425222.3
(22) Date of filing: 10.04.2002
(51) Int. Cl.: B05B 15/12, C02F 11/00

(54) **Installation for the elimination of atmospheric emissions of organic solvents used for paint thinning**

(30) Priority: 12.04.2001 IT MC20010041
(71) Applicant: Pierini, Massimo, 62012 Civitanova Marche (MC) (IT); Felici, Alberto, 63100 Ascoli Piceno (AP) (IT)
(72) Inventor: Pierini, Massimo, 62012 Civitanova Marche (MC) (IT); Felici, Alberto, 63100 Ascoli Piceno (AP) (IT)
(74) Representative: Baldi, Claudio

(57) **Abstract**

The present invention relates to an installation for the elimination of atmospheric emissions of organic solvents used for paint thinning, which comprises a purification unit (4a,4b) of wash water, which can be recycled.

## Description

The present patent application for industrial invention relates to an installation for the elimination of atmospheric emissions of the organic solvents that are commonly used for paint thinning, both in case of paints that are completely dissolved in organic solvent and paints with water emulsion mixed with organic solvent.

As it is known, modern spray booths produce fumes containing colouring resin powders and exhalations of water vapour and organic solvents. Colouring resin powders are usually eliminated through a veil of water inside the spray booth, while exhalations are introduced in special flood or bubbling systems, where vapours of organic solvents form a solution with wash water, which undergoes continuous recycling.

The elimination achieved in this type of installations, however, is not complete, being limited by the saturation level of wash water, with the unsolved problem of eliminating the residual mass of organic solvents.

The residual amount of organic solvents is currently treated with a series of activated carbon filters or through a catalytic post-combustion process.

It has been noted, however, that activated carbon filters cannot guarantee reliable results if the organic solvents contain xylose silicones, which are often used as levelling agents in paints and are capable of covering the surface of activated carbon, thus inhibiting its filtering properties.

Moreover, it must be said that activated carbon filter systems have very high manufacturing and managing costs, it being necessary to include a used carbon regeneration process.

On the other hand, post-combustion processes can guarantee good results only if the organic solvents are free of colouring resin powders and if the combustion temperature remains high and constant, since abrupt temperature reductions determine the formation and emission of highly polluting cracking sub-products, such as dioxin.

In addition, installations have very high operating costs because they must be powered with suitable fuel, such as methane, for example, if the emissions of organic solvents are not sufficient to cause spontaneous combustion.

The purpose of the invention is to realise an installation for the elimination of atmospheric emissions of the organic solvents that are commonly used for paint thinning, which does not use filters or post-combustion processes.

The new installation of the invention is characterised by the fact that it comprises a treatment unit of wash water saturated with organic solvent, in which water is purified and recycled both in the spray booth and in the flood or bubbling installations.

This means that, instead of being fed with recirculated water that will be saturated, the spray booth and installation are fed with a continuous stream of purified water that, as such, cannot reach its saturation level by passing once through the spray booth or the installation. For this reason, the residual mass of organic solvent that arrives in the installation forms a solution with wash water, thus eliminating the filters and post-combustion systems that are used today to capture the residual amount of organic solvents contained in the exhalations emitted by the installations.

The treatment unit of wash water saturated with organic solvent can consist in an ordinary fractional distillation plant or in an ordinary biodegradation installation using bacteria or enzymatic catalysis.

Organic solvent and purified water are emitted by the fractional distillation plant and recycled in the painting system. Sludge and purified water, instead, are emitted by the biodegradation installation, with the possibility of recycling water in the installation.

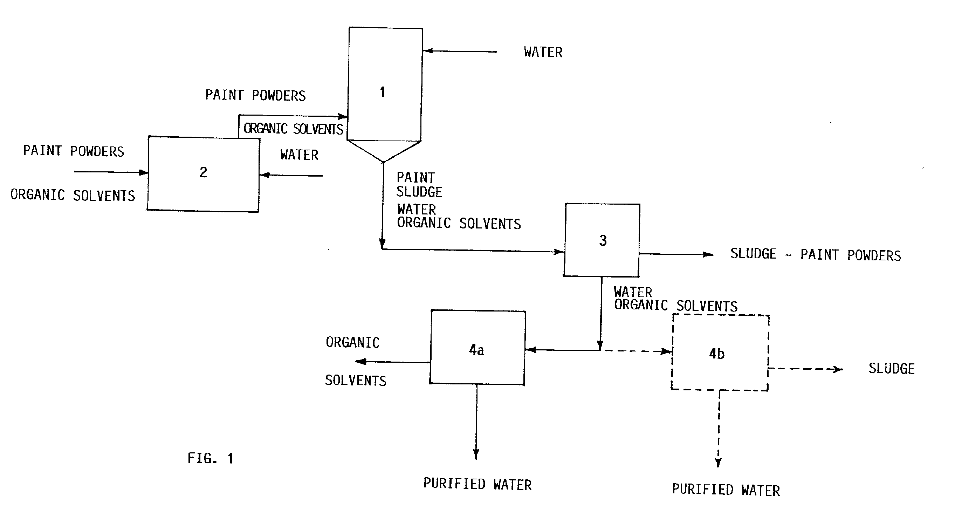

For major clarity the description of the installation according to the present invention continues with reference to the enclosed drawing, which is a block diagram of the various operating phases of the installation.

With reference to the figure, the installation of the invention comprises a flood or bubbling unit (1) in which paint powders and organic solvents emitted in the spray booth (2) are conveyed.

The installation of the invention also comprises a filtering unit (3) of known type, defined as "filter-press", which is fed with the products discharged by the unit (1) containing sludge, paint powders and a solution of organic solvents and water.

The filter-press (3) discharges dry sludge with paint powders on one side, and a solution of water and organic solvent on the other side.

The installation of the invention is characterised by the fact that a treatment unit for the solution of water and organic solvents is located downstream the filter-press (3), capable of separating water from organic solvents. In this way, purified water can be recycled both in the spray booth (2) and in the flood or bubbling unit (1).

Alternatively, the unit used to treat the solution of water and organic solvents can consist in an ordinary fractional distillation plant (4a) or an ordinary biodegradation plant (4b) using bacteria or enzymatic catalysis.

In the first case, the fractional distillation plant (4a) discharges water on one side and organic solvents on the other side. Water is recycled both in the spray booth (2) and in the flood or bubbling unit (1) and organic solvents are used again for paint thinning.

In the second case, the biodegradation plant (4b) discharges water on one side and sludge with organic solvents on the other side.

## Claims

1. Installation for the elimination of atmospheric emissions of the organic solvents that are commonly used for paint thinning, of the type comprising:
- a flood or bubbling unit (1), in which paint powders and organic solvents emitted in the spray booth (2) are conveyed.
- a filtering unit (3) of known type, defined as "filter-press", fed with the products discharged by the unit (1);
**characterised by** the fact that a treatment unit for the solution of water and organic solvents is located downstream the filter-press (3), capable of separating water from organic solvents, so that purified water can be recycled both in the spray booth (2) and in the flood or bubbling unit (1).

2. Installation according to the previous claim, **characterised by** the fact that the unit used to treat the solution of water and organic solvents consists in an ordinary fractional distillation plant (4a).

3. Installation according to claim 1), **characterised by** the fact that the unit used to treat the solution of water and organic solvents consists or in an ordinary biodegradation plant (4b) using bacteria or enzymatic catalysis.
